# EUROPEAN PATENT SPECIFICATION

(11) **EP 2 214 342 B1**
(45) Date of publication and mention of the grant of the patent: **18.06.2014**
(21) Application number: 10162669.5
(22) Date of filing: 06.03.2007
(51) Int. Cl.: H04L 9/32

(54) **Method and system for implementing authentication on information security**
Verfahren und System zur Umsetzung der Authentifizierung von Informationssicherheit
Procédé et système de mise en 'uvre d'une authentification pour la sécurisation d'informations

(30) Priority: 07.04.2006 CN 200610074282; 07.04.2006 CN 200610074283
(43) Date of publication of application: 04.08.2010
(62) Divisional of application: 07711053.4
(73) Proprietor: Huawei Technologies Co., Ltd., Shenzhen, Guangdong 518129 (CN)
(72) Inventor: Liu, Shuling, 518129, Shenzhen Guangdong (CN); Wei, Jiwei, 518129, Shenzhen Guangdong (CN); Li, Chao, 518129, Shenzhen Guangdong (CN)
(74) Representative: Körber, Martin Hans

(56) References cited:
- WO-A1-03/007538
- US-A1- 2003 115 475

## Description

### Field of the Invention

The present invention relates to information security technologies, and particularly, to a method and system for implementing authentication on information security.

### Background of the Invention

The International Telecommunications Union (ITU) and the Internet Engineering Task Force (IETF) have put forth a concept of Privilege Management Infrastructure (PMI). The PMI can be integrated with the Public Key Infrastructure (PKI) for systematically performing privilege management and offering authorization services over users. In such a way, the PMI, together with the PKI, can assure information security.

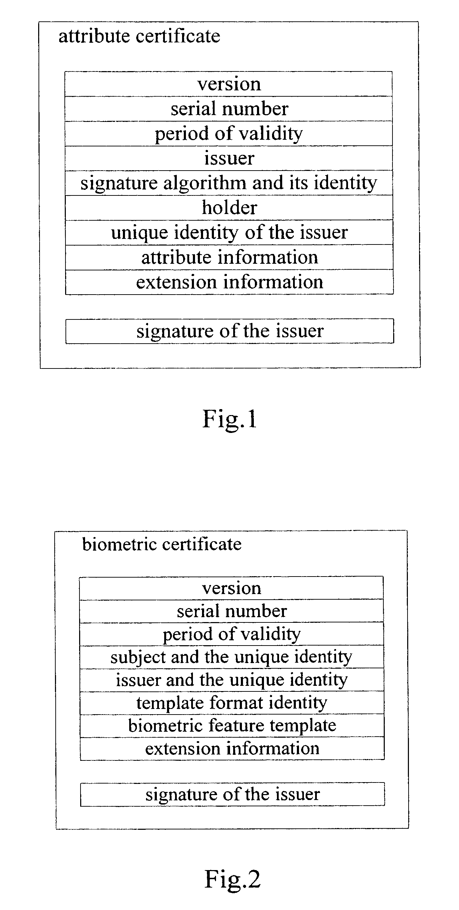

The PMI includes components such as attribute certificate (AC), attribute authority (AA), attribute certificate repository, etc., and is used for generating, managing, storing, issuing and revoking privileges and certificates. The AC is a data structure with a digital signature which binds an entity and privileges together. That is, the AC defines the privileges granted to the entity. Figure 1 shows the format of an AC, including the version, serial number, period of validity, issuer, signature algorithm and its identity, holder, unique identifier of the issuer, attribute information, extension information and signature of the issuer. The definition of the privileges granted to the entity is included in the attribute information.

The authentication on information security for the user includes privilege authentication and identity authentication. In practical applications, a system may perform either privilege authentication, e.g., PMI authentication, or identity authentication, e.g., PKI authentication, or both PMI authentication and PKI authentication. Different pattern of authentication on information security offers different accuracy and reliability. Generally, high accuracy and reliability are required for authentication on information security to assure the security of resources.

In the paper of US 2003/0115475 A1 (RUSSO ANTHONY P [US] ET AL), 19 June 2003, there is disclosed a biometrically enhanced digital certificates and system and method for making and using.

In the paper of "Access Control based on Attribute Certificates for Medical Intranet Applications" (IOANNINS MAVRIDIS ET AL), JOURNAL OF MEDICAL INTERNET RESEARCH, [Online] vol. 3, 1 January 2001 (2001-01-01), -1 January 2001 (2001-01-01) pages 1-8, Greece Retrieved from the Internet: URL:
http://www.jmir.org/article/viewFile/jmir_v3ile9/2 [retrieved on 2010-01-22], there is disclosed a security policy, DIMEDAC(Distributes Medical Database Access Control), which is compatible with emerging public key and privilege management infrastructure.

In the paper of "Internet X.509 Public Key Infrastructure: Qualified Certificates Profile; draft-ietf-pkix-sonof3039-06.txt" (SANTESSON (MICROSOFT) M NYSTROM (RSA SECURITY) T POLK (NIST) S), IETF STANDARD-WORKING-DRAFT, INTERNET ENGINEERING TASK FORCE, IETF, CH, vol. pkix, no.6, 1 February 2004 (2004-02-01), XP015025321 ISSN: 0000-0004, there is disclosed a certificate profile that supports issuance of Qualified Certificates independent of local, legal requirements.

In the paper of US 6310966 B1 (DULUDE ROBERT S [US] ET AL), 30 October 2001, there is disclosed a biometric identification, which is combined with digital certificates for electronic authentication as biometric certificates.

In the paper of US 2005/0240779 A1 (AULL KENNETH W [US] ET AL), 27 October 2005, there is disclosed a secure local or remote biometric(s) identity and privilege (biotoken).

In the paper of US 2004/0162984 A1 (FREEMAN WILLIAM E [US] ET AL), 19 August 2004, there is disclosed a secure identity and privilege.

### Summary

Methods and systems for implementing authentication on information security are provided in the embodiments of the present invention.

A method for authentication on information security, the method comprises:
receiving, by a service providing unit, from a user, an access request which carries an attribute certificate and a biometric certificate, wherein different security levels are set for attributes with different privileges in the attribute certificate;
acquiring, by the service providing unit a biometric algorithm certificate which records corresponding relations between security levels and one or more biometric identification parameters;
determining, by the service providing unit based on the privilege of an attribute in the attribute certificate, the security level of the attribute, and acquiring the one or more biometric identification parameters corresponding to the security level;
acquiring, by an identity authentication unit, the biometric certificate and biometric feature data of the user to perform identity authentication, and determining whether a match degree between the biometric feature data and the biometric certificate meets a requirement set forth by the one or more biometric identification parameters;
performing, by a privilege providing unit, privilege authentication based on the attribute certificate; and
controlling, by the service providing unit user access based on results of the identity authentication and privilege authentication;
wherein the biometric identification parameters comprises biometric type, recognition algorithm, false match rate, retrial number or biometric data quality.

A system for implementing authentication on information security, the system comprises:
a client terminal, for sending an access request to a service providing unit, and receiving authentication results from the service providing unit, wherein the access request carries a biometric certificate and an attribute certificate that has set different security levels for attributes with different privileges;
the service providing unit, adapted to acquire a biometric algorithm certificate, which records corresponding relations between security levels and one or more biometric identification parameters, and biometric feature data inputted by the client terminal; and adapted to request an identity authentication unit to perform identity authentication based on the biometric certificate and request a privilege authentication unit to perform privilege authentication based on the attribute certificate; and adapted to determine the security level of the attribute based on the privilege of an attribute in the attribute certificate; and adapted to acquire the one or more biometric identification parameters corresponding to the security level; and
the identity authentication unit, adapted to perform identity authentication according to the biometric certificate for the client terminal which inputs the biometric feature data, and determine whether a match degree between the biometric feature data and the biometric certificate meets a requirement set forth by the one or more biometric identification parameters, and
the privilege authentication unit, adapted to perform privilege authentication based on the attribute certificate; wherein the biometric identification parameters comprises biometric type, recognition algorithm, false match rate, retrial number or biometric data quality.

An attribute certificate, for implementing authentication on information security, an extra item is added into the extension information of the attribute certificate to record the identity of the biometric certificate which is associated with the attribute certificate, so that the association between the attribute certificate and the biometric certificate can be established with minimum influence to the system, before an privilege authentication for a user based on the attribute certificate is performed, an identity authentication for the user based on the biometric certificate associated with the attribute certificate is performed, so that it is possible to assure corresponding relation between the privilege authentication and the identity authentication, wherein different security levels are set for attributes with different privileges in the attribute certificate, when an identity authentication of the user is performed based on the biometric certificate and biometric feature data, determining, according to the privilege(s) of the attribute in the attribute certificate, the security level of the attribute so as to obtain corresponding biometric identification parameters, and verifying whether the biometric feature data matches the biometric certificate according to the requirement given by the biometric identification parameters;
wherein the biometric identification parameters comprises biometric type, recognition algorithm, false match rate, retrial number or biometric data quality.

A biometric algorithm certificate for recording relations between security levels and one or more biometric identification parameters, used in a system for implementing authentication on information security, characterized in that the biometric algorithm certificate comprises security level list, the security level list includes one or more biometric identification parameters corresponding to different security levels, when an access request from a client terminal is received in the system, wherein the access request carries an attribute certificate that has set different security levels for attributes with different privileges; the security level of the attribute based on the privilege of an attribute in the attribute certificate is determined; and one or more biometric identification parameters corresponding to the security level is acquired , identity authentication according to the biometric certificate for the client terminal which inputs the biometric feature data is performed, and whether a match degree between the biometric feature data and the biometric certificate meets a requirement set forth by the one or more biometric identification parameters is determined, the one or more biometric identification parameters comprise:
biometric type, recognition algorithm, false match rate, retrial number or biometric data quality.

It can be seen from the foregoing technical schemes that, in the method and system for implementing authentication on information security, before an attribute certificate is used for privilege authentication, a biometric certificate associated with the attribute certificate should firstly be determined and used for identity authentication. After the user has passed the identity authentication, the attribute certificate can be used for privilege authentication, and therefore the privilege authentication and the identity authentication, which is performed based on the biometric certificate, are seamlessly combined. In another word, a corresponding relation is established between the privilege authentication and the identity authentication so that the privilege management can be performed accurately and reliably. Furthermore, the present invention is well compatible with the prior art and the authentication on information security provided in the present invention is simple and easy to perform.

### Brief Description of the Drawings

Figure 1 shows the format of an attribute certificate in the prior art;
Figure 2 shows the format of a biometric certificate in an embodiment of the present invention;
Figure 3 shows the format of an extension identifier in an embodiment of the present invention;
Figure 4 is a flow chart of the process for implementing authentication on information security in an embodiment of the present invention;
Figure 5 shows the format of a biometric algorithm certificate in an embodiment of the present invention;
Figure 6 is a flow chart of the process for implementing authentication on information security in an embodiment of the present invention;
Figure 7 is a structure schematic of a system for implementing authentication on information security in an embodiment of the present invention;
Figure 8 is a structure schematic of a system for implementing authentication on information security in an embodiment of the present invention.

### Embodiments of the Invention

Embodiments of the present invention are explained in detail hereinafter with reference to accompanying drawings.

In the embodiments of the present invention, biometric feature identification technology is adopted in information security authentication so that the attributes of biometric certificates, including uniqueness and reliability, can be employed for accurate and reliable authentication on information security. The authentication includes: before performing privilege authentication for a user based on an attribute certificate, performing the identity authentication for the user based on a biometric certificate associated with the attribute certificate, and then performing the privilege authentication based on the attribute certificate after the user has passed the identity authentication, which could assure the corresponding relation between the privilege authentication and the identity authentication and improve the accuracy and reliability of privilege management.

The biometric feature identification technology, e.g., fingerprint identification and iris identification technologies, refers to performing identity authentication based on physiological or behavioral features of human.

Therein, the biometric certificate refers to all kinds of certificates which contain biometric feature templates, including standalone certificates used for biometric authentication only and other certificates except for the antecedent standalone certificates, e.g., the public key certificate defined in RFC 3739. A biometric feature template records the biometric feature data of a subject. In order to clearly distinct the two categories of biometric certificates, the standalone certificates which are used for biometric authentication only are referred to as Class 1 biometric certificates, and certificates other than the Class 1 biometric certificates, e.g., the public key certificate defined in RFC 3739, are referred to as Class 2 biometric certificates. Biometric certificates of both Class 1 and Class 2 contain biometric feature templates.

Figure 2 shows the format of a biometric certificate in an embodiment of the present invention. The biometric certificate contains fields of: version, serial number, period of validity, subject and the unique identifier of the subject, issuer and the unique identifier of the issuer, biometric feature template, template format identity, extension information and signature of the issuer.

The version field is a version of the biometric certificate issued by the Biometric Certification Authority (BCA). The serial number is the unique identifier issued by the BCA for the biometric certificate. The period of validity shows the period through which the biometric certificate is valid, including the starting date and the ending date of the period. The subject field shows the subject identified by the biometric certificate, and the subject can be recognized according to the unique identifier of the subject. The issuer is the BCA which generates the biometric certificate and signs the biometric certificate, and the issuer can be recognized according to the unique identifier of the issuer. The biometric feature template records the biometric feature data of a subject. The template format identity contains the format identity of the biometric feature template. The extension information field contains extra information permitted to be added into the biometric certificate without altering the certificate format, e.g., the instruction on how to use the biometric certificate. The signature of the issuer includes a digital signature which is generated based on at least one of the following parameters: the serial number of the private key pair of the BCA, the period of validity, the subject and the unique identifier of the subject, the issuer and the unique identifier of the issuer, the biometric feature template, the template format identity and the extension information.

An extra item is added into the extension information of the attribute certificate to record the identity of the biometric certificate which is associated with the attribute certificate, so that the association between the attribute certificate and the biometric certificate can be established with minimum influence to the system of the prior art.

The extension information of the attribute certificate is mainly used for announcing policies related to the applications of the attribute certificate. The extension information includes basic extension information, privilege revoke extension information, root attribute authority extension information, role extension information and grant extension information, etc. In general, the extra item added into the extension information in the embodiments of the present invention is located in the basic extension information and is referred to as an extension identifier.

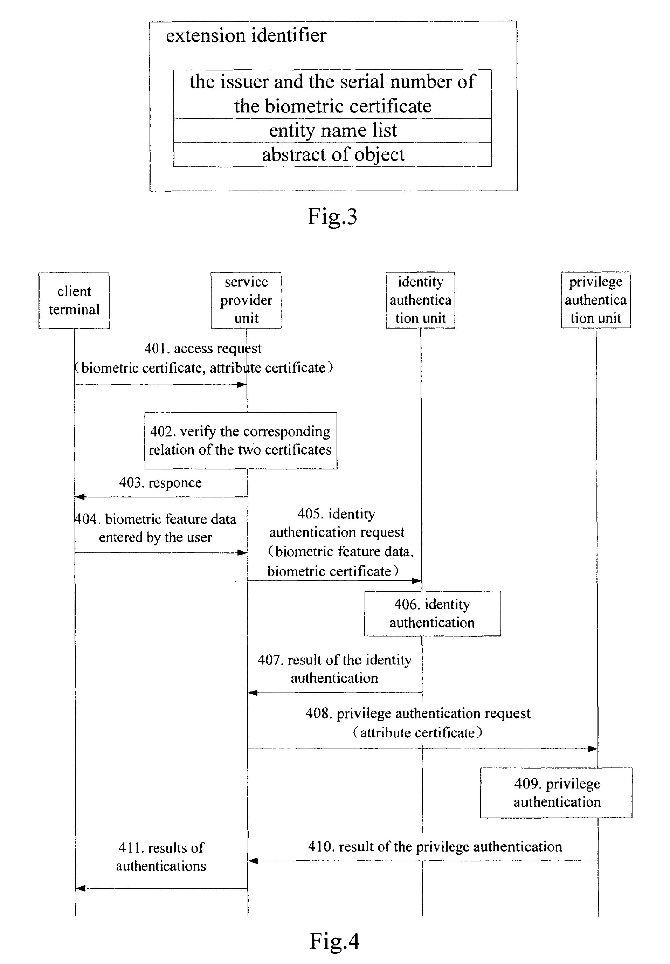

Figure 3 shows the structure of the extension identifier in an embodiment of the present invention in which a Class 1 biometric certificate is associated with the attribute certificate. In the embodiment, the extension identifier includes the biometric certificate issuer and the biometric certificate serial number, an entity name list and an abstract of object.

The issuer and the biometric certificate serial number are used for identifying the biometric certificate held by the holder of the attribute certificate. The biometric certificate is used for performing identity authentication on the holder of the attribute certificate. The entity name list is used for identifying the names of one or more attribute certificate holders. The abstract of object is the abstract information obtained through the calculation based on parameters including: serial number, period of validity, subject and the unique identifier of the subject, issuer and the unique identifier of the issuer, biometric feature template, template format identity and extension information.

The extension identifier shown in Figure 3 includes the issuer and the biometric certificate serial number, the entity name list and the abstract of object. In practical applications, the extension identifier may include any one or any combination of the above three parameters.

When the extension identifier includes only the entity name list, any one of the biometric certificates recorded in the entity name list can be used for authenticating the identity of the attribute certificate holder, i.e., all the biometric certificates recorded in the entity name list are associated with the attribute certificate.

When the extension identifier includes the biometric certificate issuer and the biometric certificate serial number and the entity name list, the biometric certificate issuer and the biometric certificate serial number are used for determining whether the attribute certificate and the biometric certificate are associated.

When the extension identifier includes the entity name list and the abstract of object, the abstract of object is used for determining whether the attribute certificate and the biometric certificate are associated.

The extension identifier of a Class 2 biometric certificate can be set according to demands or with reference to Figure 3, e.g., the extension identifier may include the biometric certificate serial number. The format of extension identifier of Class 2 biometric certificate will not be explained in detail herein.

Figure 4 is a flow chart of the process for implementing authentication on information security in an embodiment of the present invention.

Step 401: a client terminal sends an access request carrying a biometric certificate and an attribute certificate with extension identifier to a service providing unit.

Normally, the client terminal initiates the access request for obtaining information from a resource database.

The biometric certificate may include a Class 1 biometric certificate or a Class 2 biometric certificate, and the extension identifier indicates a biometric certificate that can be used for identity authentication.

Step 402: based on the received access request, the service providing unit verifies whether the biometric certificate matches the extension identifier in the attribute certificate. If the biometric certificate does not match the extension identifier, the service providing unit returns a response of refusal to the client terminal and terminates the process. If the biometric certificate matches the extension identifier, the service providing unit continues to perform Step 403.

In practical applications, the biometric certificate may be obtained from other approaches than from the access request, e.g., from a specified database.

Step 403: the service providing unit returns a response of success to the client terminal.

Step 404: upon the receipt of the response of success, the client terminal sends the biometric feature data entered by the user to the service providing unit.

Step 405: the service providing unit sends an identity authentication request, which carries the biometric feature data and the biometric certificate, to the identity authentication unit.

Step 406: the identity authentication unit extracts the biometric feature template from the biometric certificate, and performs identity authentication on the client terminal by comparing the biometric feature template with the biometric feature data entered by the user.

Furthermore, biometric authentication with different strictness degrees may be performed for attributes with different privileges in the attribute certificate according to a requirement set forth by one or more biometric identification parameters.

The biometric identification parameters may include biometric type, recognition algorithm, false match rate (FMR), retrial number, biometric data quality, etc. The biometric identification parameters may be set by the identify authentication unit or the service providing unit, or be carried in the biometric certificate. When the one or more biometric identification parameters include only the FMR and provided that the FMR is 80%, the identity authentication unit compares the biometric feature template with the biometric feature data entered by the user and verifies whether the result of the comparison falls within the range allowed by the FMR, e.g., when the similarity between the biometric feature template and the biometric feature data entered by the user reaches 90%, which is greater than the FMR, the identity authentication unit determines that the user is legal.

Step 407: the identity authentication unit sends the result of the identity authentication to the service providing unit. If the user fails to pass the identity authentication, the service providing unit will inform the client terminal of the user that the identity authentication fails and terminate the process. If the user passes the identity authentication, Step 408 will be performed.

Step 408: the service providing unit sends a privilege authentication request, which carries the attribute certificate, to the privilege authentication unit.

Step 409: the privilege authentication unit authenticates the privilege(s) of the client terminal according to the privilege(s) defined in the attribute certificate. That is, the privilege authentication unit verifies whether the client terminal has the right to obtain the requested information.

Since this process is the same as that of the privilege authentication in the prior art, it will not be explained herein.

Steps 410-411: the privilege authentication unit sends the result of the privilege authentication to the service providing unit, and the service providing unit informs the client terminal whether the authentication for the access request has been passed.

In Step 402, different schemes are adopted to deal with different types of biometric certificates, e.g., a Class 1 biometric certificate and a Class 2 biometric certificate, during the process of determining whether the biometric certificate matches the extension identifier in the attribute certificate.

When the biometric certificate is a Class 1 biometric certificate, the verification process may be divided into different cases according to different combinations of extension identifier.

When the extension identifier includes the biometric certificate issuer and the biometric certificate serial number, the verification process includes: determining, by the service providing unit, whether the issuer and the serial number recorded in the biometric certificate are identical with the issuer and the serial number of the biometric certificate in the extension identifier, and if the issuer and the serial number recorded in the biometric certificate are identical with the biometric certificate issuer and the biometric certificate serial number in the extension identifier, determining that the biometric certificate matches the extension identifier; otherwise, determining that the biometric certificate does not match the extension identifier.

When the extension identifier includes an entity name list which includes at least a subject and the unique identifier of the subject, the verification process includes: determining whether the subject and the unique identifier of the subject in the biometric certificate are included in the entity name list. If the subject and the unique identifier of the subject in the biometric certificate are included in the entity name list, it is determined that the biometric certificate matches the extension identifier; otherwise, it is determined that the biometric certificate does not match the extension identifier.

When the extension identifier includes the abstract of object, the verification process includes: calculating, based on the serial number of the biometric certificate, period of validity, subject and the unique identifier of subject which are recorded in the biometric certificate, to obtain an abstract, and determining whether the abstract obtained through calculation is identical with the abstract of object in the extension identifier. If the abstract obtained through calculation is identical with the abstract of object in the extension identifier, determining that the biometric certificate matches the extension identifier; otherwise, determining that the biometric certificate does not match the extension identifier.

When the extension identifier includes the issuer and the serial number of the biometric certificate and the entity name list, the issuer and the serial number of the biometric certificate are used for determining whether the biometric certificate matches the extension identifier.

When the extension identifier includes the entity name list and the abstract of object, the abstract of object is used for determining whether the biometric certificate matches the extension identifier.

When the biometric certificate is a Class 2 biometric certificate and provided that the extension identifier includes the serial number of the biometric certificate, the verification process may include:
determining, by the service providing unit, whether the biometric certificate carried in the access request is the Class 2 biometric certificate identified by the serial number of the biometric certificate in the extension identifier, and determining that the biometric certificate matches the extension identifier if the biometric certificate is the Class 2 biometric certificate identified by the serial number in the extension identifier, otherwise determining that the biometric certificate does not match the extension identifier.

Another embodiment of the verification process may include: obtaining, by the service providing unit, the Class 2 biometric certificate identified by the serial number of the biometric certificate in the extension identifier, verifying whether the obtained Class 2 biometric certificate is identical with the biometric certificate in the access request, and determining that the biometric certificate matches the extension identifier if the obtained Class 2 biometric certificate is identical with the biometric certificate in the access request, otherwise determining that the biometric certificate does not match the extension identifier.

Through the processes described in the foregoing description, the biometric authentication and the privilege authentication are seamlessly combined, accurate and reliable privilege management is thus achieved.

It can be seen from Figure 4 that the usage of the attribute certificate in the embodiments of the present invention can be further extended, so that biometric algorithm certificates are employed to flexibly provide one or more biometric identification parameters, which enable attributes with different privileges in the attribute certificate to go through biometric authentication with different strictness degrees. The biometric identification parameters include biometric type, type algorithm, FMR, retrial number, biometric data quality, etc. In practical applications, different groups of biometric identification parameters can be set for different security levels, and the strictness degrees of the biometric authentication is controlled by the security levels.

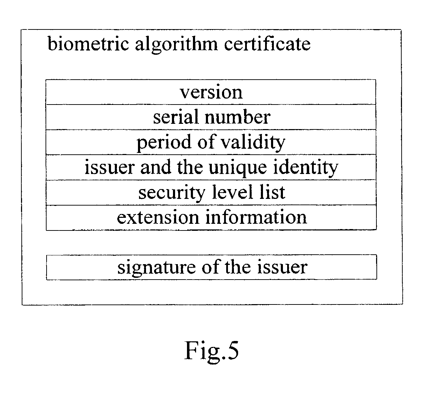

The biometric algorithm certificate (BAC) refers to a certificate which records all types of biometric identification parameters issued by biometric authentication authorities. Figure 5 shows the format of the BAC in an embodiment of the present invention, including fields of: version, serial number, period of validity, issuer, security level list, extension information and the signature of the issuer. The definitions of the version, serial number, period of validity and issuer are similar to the definitions of corresponding parameters in the biometric certificate and will not be explained herein.

The signature of the issuer includes a digital signature generated based on at least one of the following parameters: serial number of private key pair based on the Ticket Based Authentication (TBA), period of validity, issuer and the unique identifier of the issuer, biometric type and the unique identifier of the biometric type, recognition algorithm and the unique identifier of the recognition algorithm, security level list and extension information.

The security level list includes one or more biometric identification parameters corresponding to different security levels, and the structure of the list is shown hereafter: BioSecLevelList ATTRIBUTE :: = {

```
 WITH SYNTAX SecurityLevelBioRefLIST
 ID id-at-bioSecLevelList}
 SecurityLevelBioRefLIST :: = SEQUENCE{
 securityLevelNum INTEGER,
 securityLevelBioRef SecurityLevelBioRef}
 SecurityLevelBioRef :: = SEQUENCE{
 biometricSecurityLevelBiometricSecurityLevel,
 policy Policy,
 biometricPara BiometricPara}
 BiometricSecurityLevel :: = SEQUENCE{
 uniqueIdentifierOfBioParaInfo CSTRING,
 securityDegree INTEGER}
 BiometricPara :: = SEQUENCE{
 biometricNUM INTEGER OPTION,
 biometricType BiometricType--CBEFF defined type--,
 biometricAlgorithm AlgorithmIdentifier,
 requestFMR BioAPIFMR,
 trialNumber INTEGER OPTIONAL,
 requestQuality INTEGER OPTIONAL
 ...}
```

The biometricType indicates the biometric type, i.e., which type of biometric feature data, e.g., fingerprint, iris, voice, etc., are used for biometric authentication. The biometricAlgorithm indicates the recognition algorithm used for calculating the type of biometric feature data. The requestFMR indicates the FMR, i.e., the false rate allowed in a biometric authentication. The trialNumber indicates the number allowed for a user to retry after the biometric authentication fails, and the requestQuality indicates the quality of the biometric feature data entered by the user.

Even at a same security level, the parameters required by different biometric types and recognition algorithms are different, as well.

In addition, every attribute to which a privilege or privileges are assigned in the attribute certificate has been given a corresponding security level of biometric authentication. In normal cases, an attribute with high privileges shall correspond to a high security level, i.e., to stricter biometric authentication, in order to achieve better resources protection.

The corresponding relation between privileges assigned to an attribute and a security level can be established through direct modification of the attribute definition. For example, an attribute is defined in X.501| ISO/ IEC9594-2 as follows:

```
 Attribute :: = SEQUENCE {
 Type ATTRIBUTE.&id({ SupportedAttributes}),
 Values SET SIZE(0..MAX) OF ATTRIBUTE.&TYPE
 ({SupportedAttributes} {@type}),
 valuesWithContext SET SIZE(1..MAX) OF SEQUENCE {
 value ATTRIBUTE.&Type({SupportedAttributes} {@type}),
 contextList SET SIZE(1..MAX) OF Context} OPTIONAL}
```

The Type indicates the type information of the attribute, the Value indicates corresponding value of the Type and the Context indicates other application capability related information. In X.501| ISO/ IEC9594-2, the Context adopts the following format:

```
 Context :: = SEQUENCE{
 contextType CONTEXT.&id({SupportedContexts}),
 contextValues SET SIZE(1..MAX) OF CONTEXT.&Type({Supported Contexts}
 {@contextType}),
 fallback BOOLEAN DEFAULT FALSE}
```

The contextType is the object identifier, the contextValues indicates corresponding value of the contextType, and the fallback indicates relation between an attribute and the contextType. For example, the Context can be used for indicating security level of biometric authentication corresponding to an attribute, of which the contextType indicates the security level of biometric authentication and the contextValues indicates the value of the security level.

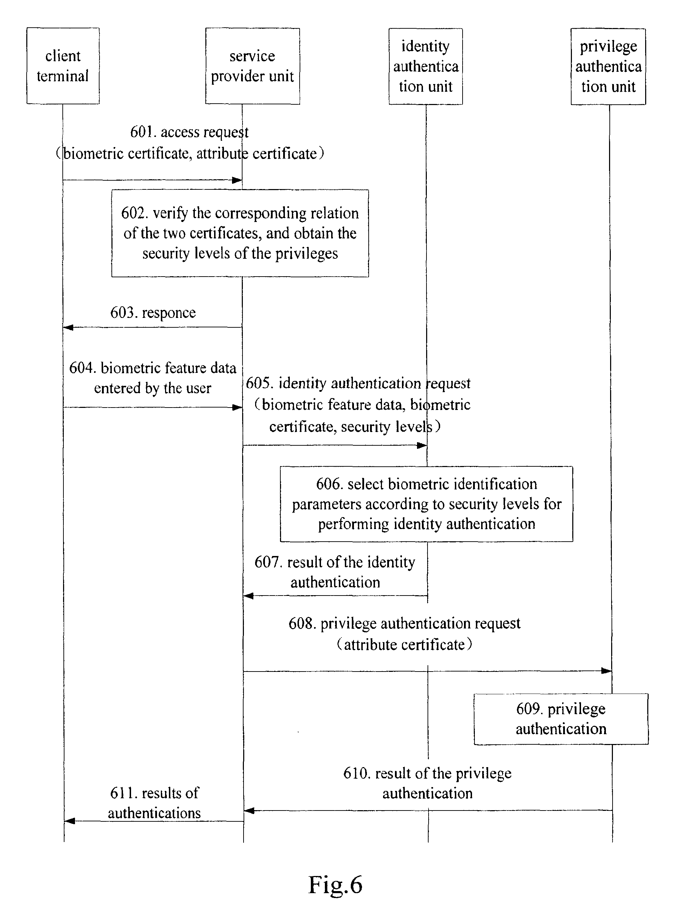

In another embodiment of the present invention, the user can access a resource database, which is under privilege management, to obtain the required information. In such case, a biometric feature template is constructed based on biometric feature data of all users that are allowed to access the resource database and the template is included in the biometric certificate. In the attribute certificate, each attribute with privileges has been given a corresponding security level. Figure 6 shows the process of implementing authentication on information security in this embodiment, which includes:
Step 601: a client terminal sends an access request to the service providing unit, requesting to access the resource database. The access request carries a biometric certificate and an attribute certificate with extension identifier.
Step 602: the service providing unit verifies whether the attribute certificate and the biometric certificate are associated, i.e., whether the biometric certificate matches the extension identifier of the attribute certificate. If the biometric certificate does not match the extension identifier of the attribute certificate, the service providing unit returns a refusal to the client terminal; otherwise, perform Step 603.
Step 603: the service providing unit returns a response of success to the client terminal.
Step 604: a collection unit collects biometric feature data of the user, and sends the data to the service providing unit.
Step 605: the service providing unit sends an identity authentication request to the identity authentication unit. The identity authentication request carries the biometric feature data and a biometric algorithm certificate with a security information list.
Step 606: the identity authentication unit searches the security information list in the biometric algorithm certificate based on security levels corresponding to the attributes in the attribute certificate, obtains the biometric identification parameters required in the biometric authentication, and authenticates the identity of the user based on the biometric identification parameters, i.e., verifies according to the requirement of the biometric identification parameters whether the collected biometric feature data matches the biometric feature template in the biometric certificate.

Step 607: the identity authentication unit sends the result of the identity authentication to the service providing unit. If the result indicates that the identity authentication fails, the service providing unit will inform the user and terminate the process; and if the identity authentication is successful, perform Step 608.

Step 608: the service providing unit sends a privilege authentication request, which carries the attribute certificate, to the privilege authentication unit.

Steps 609-610: the privilege authentication unit authenticates the privilege of the client terminal based on the attribute certificate, and sends the result of the privilege authentication to the service providing unit.

Step 611: the service providing unit informs the user of the authentication result for the access request. I f the user has passed the authentication, the user is allowed to access the resource database and obtain the requested information.

One or more steps in the flows shown in Figure 4 or 6 can be adopted in other embodiments of the present invention in practical applications, i.e., not all the steps in the processes are essential and the steps can be selected as required.

For example, a process may include: setting the biometric algorithm certificate to record the corresponding relations between security levels and the biometric iden tification parameters; sending, by the user, an access request which carries an attribute certificate that has set different security levels for attributes with different privileges, i.e., associating the attribute certificate with the biometric algorithm certificate.

Thereafter, when authenticating the identity of the user based on the biometric certificate and the biometric feature data, determining, according to the privilege(s) of the attribute in the attribute certificate, the security level of the attribute so as to obtain corresponding biometric identification parameters, and verifying whether the biometric feature data matches the biometric certificate according to the requirement given by the biometric identification parameters.

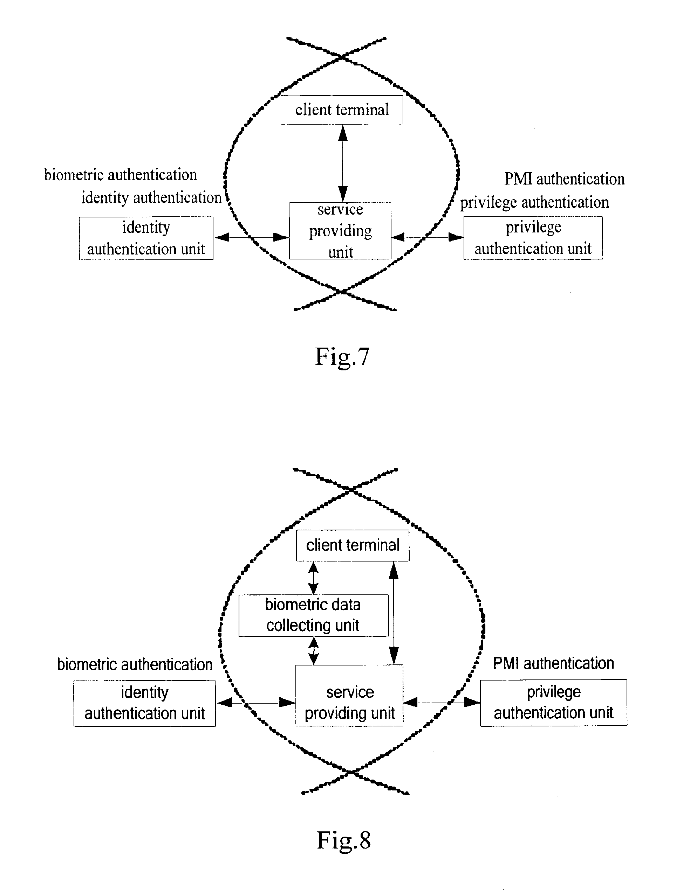

Figure 7 is a structure schematic of a system for implementing authentication on information security in an embodiment of the present invention. The system includes a client terminal, a service providing unit, an identity authentication unit and a privilege authentication unit. It should be noted that Figure 7 is merely an example, and the number of the terminals and units in the system is not limited.

The client terminal is used for initiating an access request to the service providing unit, and/or receiving the result of the identity/privilege authentication from the service providing unit. The access request includes a biometric certificate and an attribute certificate with extension identifier, the extension identifier is set in the basic extension information of the attribute certificate. The biometric certificate may include a Class 1 biometric certificate or a Class 2 biometric certificate, and the embodiments of the present invention impose no requirements on the type of biometric certificate.

The service providing unit is used for receiving the access request, verifying whether the attribute certificate in the access request is associated with the biometric certificate, requesting the identity authentication unit to authenticate the identity of the client terminal, receiving the result of the identity authentication from the identity authentication unit, returning the result of the identity authentication to the client terminal, and/or requesting the privilege authentication unit to authenticate the privilege(s) of the client terminal, receiving the result of the privilege authentication from the privilege authentication unit and returning the result of the privilege authentication to the client terminal.

The identity authentication unit is used for performing identity authentication based on the biometric certificate. The privilege authentication unit is used for performing privilege authentication based on the attribute certificate.

The service providing unit, the identity authentication unit and the privilege authentication unit are logic entities which can be installed in one physical entity or in different physical entities.

Figure 8 is a structure schematic of a system for implementing authentication on information security in another embodiment of the present invention, the system including a biometric data collecting unit, an identity authentication unit, a privilege authentication unit and a service providing unit.

The biometric data collection unit is used for collecting the biometric feature data of a user.

The identity authentication unit is used for authenticating the identity of the user based on the collected biometric feature data, the biometric certificate and the biometric identification parameter(s), i.e., verifying whether the collected biometric feature data match the biometric feature template in the biometric certificate.

The privilege authentication unit is used for authenticating the privilege(s) of the user based on the attribute certificate, i.e., verifying whether the user has the right to access certain services.

The service providing unit is used for providing services for the user once he has passed the authentications, e.g., allowing the user to access a resource database under privilege management.

In yet another embodiment of the present invention, the client terminal sends an access request which carries an attribute certificate. Therein, different security levels are set for attributes with different privileges in the attribute certificate.

The service providing unit is used for acquiring a biometric algorithm certificate, where the biometric algorithm certificate records corresponding relations between security levels and biometric identification parameter(s), and the biometric feature data entered by the client terminal. Further, the service providing unit is used for determining the security level of the attribute recorded in the attribute certificate based on the privilege of the attribute so as to obtain corresponding biometric identification parameters, and requesting an identity authentication unit to perform identity authentication based on the biometric certificate or requesting a privilege authentication unit to perform privilege authentication based on the attribute certificate.

The identity authentication unit is used for performing identity authentication for the client terminal which enters the biometric feature data, based on the biometric certificate, by verifying whether the match degree between the biometric feature data and the biometric certificate meets the requirement set forth by the biometric identification parameter(s).

The foregoing description includes only embodiments of the present invention and is not for use in limiting the protection scope.

## Claims

1. A method for authentication on information security, **characterized in that** the method comprises:
receiving, by a service providing unit from a user, an access request which carries an attribute certificate (601) and a biometric certificate, wherein different security levels are set for attributes with different privileges in the attribute certificate;
acquiring, by the service providing unit a biometric algorithm certificate which records corresponding relations between security levels and one or more biometric identification parameters;
determining, by the service providing unit based on the privilege of an attribute in the attribute certificate, the security level of the attribute, and acquiring the one or more biometric identification parameters corresponding to the security level (606) ;
acquiring, by an identity authentication unit the biometric certificate and biometric feature data of the user to perform identity authentication, and determining whether a match degree between the biometric feature data and the biometric certificate meets a requirement set forth by the one or more biometric identification parameters (606) ;
performing, by a privilege authentication unit privilege authentication based on the attribute certificate (609) ; and
controlling, by the service providing unit user access based on results of the identity authentication and privilege authentication;
wherein the biometric identification parameters comprises biometric type, recognition algorithm, false match rate, retrial number or biometric data quality.

2. The method according to Claim 1, wherein the attribute certificate includes an extension identifier for indicating a biometric certificate associated with the attribute certificate; the step of acquiring a biometric certificate and biometric feature data of the user to perform identity authentication, comprises:
acquiring the biometric certificate, determining, according to the extension identifier, whether the acquired biometric certificate is associated with the attribute certificate carried in the access request;
acquiring biometric feature data of the user, and performing (606) identity authentication based on the biometric feature data and the biometric certificate when the biometric certificate is associated with the attribute certificate.

3. The method according to Claim 2, wherein the extension identifier includes a biometric certificate issuer and a biometric certificate serial number; and
said determining whether the acquired biometric certificate is associated with the attribute certificate comprises:
determining that the biometric certificate and the attribute certificate are associated when the issuer biometric certificate and the biometric certificate serial number recorded in the biometric certificate are identical with the biometric certificate issuer and the biometric certificate serial number recorded in the extension identifier.

4. The method according to Claim 2, wherein the extension identifier comprises an entity name list which includes at least one subject and a unique identifier of the subject; and
said determining whether the acquired biometric certificate is associated with the attribute certificate comprises:
determining that the biometric certificate and the attribute certificate are associated when a subject and a unique identifier of the subject recorded in the biometric certificate are included in the entity name list of the extension identifier.

5. The method according to Claim 2, wherein the extension identifier comprises an abstract of object; and
said determining whether the acquired biometric certificate is associated with the attribute certificate comprises:
calculating to obtain an abstract based on a biometric certificate serial number, period of validity, subject and the unique identifier of the subject, issuer and the unique identifier of the issuer, biometric feature template, template format identity and extension information recorded in the biometric certificate, ; and
determining that the biometric certificate and the attribute certificate are associated when the abstract obtained through calculation is identical with the abstract of object in the extension identifier.

6. The method according to Claim 2, wherein the extension identifier comprises at least one of a biometric certificate issuer and a biometric certificate serial number, an entity name list and an abstract of object.

7. The method according to Claim 6, wherein the abstract of object is obtained through the calculation based on at least one of the parameters including: serial number, period of validity, subject and the unique identifier of the subject, issuer and the unique identifier of the issuer, template format identity, biometric feature template and extension information of the biometric certificate.

8. The method according to Claims 2 to 7, wherein the extension identifier is included in basic extension information of the attribute certificate.

9. The method according to Claim 2, further comprising:
setting security levels for attributes with different privileges in the attribute certificate;
and
said performing identity authentication based on the biometric feature data and biometric certificate (606) comprises:
if the match degree meets the requirement, determining that the user has passed the identity authentication;
if the match degree does not meet the requirement, determining that the user has failed the identity authentication.

10. A system for implementing authentication on information security, **characterized in that** the system comprises:
a client terminal, for sending an access request to a service providing unit, and receiving authentication results from the service providing unit, wherein the access request carries a biometric certificate and an attribute certificate that has set different security levels for attributes with different privileges;
the service providing unit, adapted to acquire a biometric algorithm certificate, which records corresponding relations between security levels and one or more biometric identification parameters, and biometric feature data inputted by the client terminal; and adapted to request an identity authentication unit to perform identity authentication based on the biometric certificate and request a privilege authentication unit to perform privilege authentication based on the attribute certificate; and adapted to determine the security level of the attribute based on the privilege of an attribute in the attribute certificate; and adapted to acquire the one or more biometric identification parameters corresponding to the security level;
the identity authentication unit, adapted to perform identity authentication according to the biometric certificate for the client terminal which inputs the biometric feature data, and determine whether a match degree between the biometric feature data and the biometric certificate meets a requirement set forth by the one or more biometric identification parameters; and
the privilege authentication unit, adapted to perform privilege authentication based on the attribute certificate;
wherein the biometric identification parameters comprises biometric type, recognition algorithm, false match rate, retrial number or biometric data quality.

## Patentansprüche

1. Verfahren zur Authentifizierung zur Informationssicherheit, **dadurch gekennzeichnet, dass** das Verfahren Folgendes umfasst:
Empfangen, durch eine Dienstbereitstellungseinheit von einem Anwender, einer Zugangsanforderung, die ein Attributzertifikat (601) und ein biometrisches Zertifikat führt, wobei unterschiedliche Sicherheitsebenen für Attribute mit unterschiedlichen Privilegien in dem Attributzertifikat eingestellt sind;
Erfassen, durch die Dienstbereitstellungseinheit, eines Zertifikats eines biometrischen Algorithmus, der entsprechende Beziehungen zwischen Sicherheitsebenen und einem oder mehreren biometrischen Identifikationsparametern aufzeichnet;
Bestimmen, durch die Dienstbereitstellungseinheit, basierend auf dem Privileg eines Attributs in dem Attributzertifikat, der Sicherheitsebene des Attributs und Erfassen des einen oder der mehreren biometrischen Identifikationsparameter, die der Sicherheitsebene entsprechen (606);
Erfassen, durch eine Identitätsauthentifizierungseinheit, des biometrischen Zertifikats und biometrischer Merkmalsdaten des Anwenders, um eine Identitätsauthentifizierung durchzuführen, und Bestimmen, ob ein Übereinstimmungsgrad zwischen den biometrischen Merkmalsdaten und dem biometrischen Zertifikat eine Anforderung erfüllt, die durch den einen oder die mehreren biometrischen Identifikationsparameter (606) vorgegeben ist;
Ausführen, durch eine Privilegienauthentifizierungseinheit, einer Privilegienauthentifizierung basierend auf dem Attributzertifikat (609); und
Steuern, durch die Dienstbereitstellungseinheit, des Anwenderzugriffs basierend auf Ergebnissen der Identitätsauthentifizierung und der Privilegienauthentifizierung;
wobei die biometrischen Identifikationsparameter den biometrischen Typ, den Erkennungsalgorithmus, die Falschabgleichsrate, die Anzahl der Wiederholungen oder die Qualität der biometrischen Daten umfassen.

2. Verfahren nach Anspruch 1, wobei das Attributzertifikat eine Erweiterungskennung zum Angeben eines biometrischen Zertifikats, das dem Attributszertifikat zugeordnet ist, enthält; wobei der Schritt des Erfassens eines biometrischen Zertifikats und biometrischer Merkmalsdaten des Anwenders, um Identitätsauthentifizierung auszuführen, Folgendes umfasst:
Erfassen des biometrischen Zertifikats, Bestimmen gemäß der Erweiterungskennung,
ob das erfasste biometrische Zertifikat dem Attributzertifikat, das in der Zugangsanforderung geführt ist, zugeordnet ist;
Erfassen biometrischer Merkmalsdaten des Anwenders und Ausführen (606) von Identitätsauthentifizierung basierend auf den biometrischen Merkmalsdaten und dem biometrischen Zertifikat, wenn das biometrische Zertifikat dem Attributzertifikat zugeordnet ist.

3. Verfahren nach Anspruch 2, wobei die Erweiterungskennung eine Ausgabestelle des biometrischen Zertifikats und eine laufende Nummer des biometrischen Zertifikats enthält; und
das Bestimmen, ob das erfasste biometrische Zertifikat dem Attributzertifikat zugeordnet ist, Folgendes umfasst:
Bestimmen, dass das biometrische Zertifikat und das Attributzertifikat einander zugeordnet sind, wenn die Ausgabestelle des biometrischen Zertifikats und die laufende Nummer des biometrischen Zertifikats, die in dem biometrischen Zertifikat aufgezeichnet sind, gleich der Ausgabestelle des biometrischen Zertifikats und der laufenden Nummer des biometrischen Zertifikats sind, die in der Erweiterungskennung aufgezeichnet sind.

4. Verfahren nach Anspruch 2, wobei die Erweiterungskennung eine Liste von Entitäts-Namen umfasst, die wenigstens ein Objekt und eine eindeutige Kennung des Objekts enthält; und
das Bestimmen, ob das erfasste biometrische Zertifikat dem Attributzertifikat zugeordnet ist, Folgendes umfasst:
Bestimmen, dass das biometrische Zertifikat und das Attributzertifikat einander zugeordnet sind, wenn ein Objekt und eine eindeutige Kennung des Objekts, die in dem biometrischen Zertifikat aufgezeichnet sind, in der Liste der Entitäts-Namen der Erweiterungskennung enthalten sind.

5. Verfahren nach Anspruch 2, wobei die Erweiterungskennung einen Auszug des Objekts umfasst; und
das Bestimmen, ob das erfasste biometrische Zertifikat dem Attributzertifikat zugeordnet ist, Folgendes umfasst:
Berechnen, um einen Auszug basierend auf einer laufenden Nummer eines biometrischen Zertifikats, Geltungsdauer, Objekt und eindeutiger Kennung des Objekts, Ausgabestelle und eindeutiger Kennung der Ausgabestelle, biometrischer Merkmalsschablone, Merkmalsschablonenkennung und Erweiterungsinformationen,
die in dem biometrischen Zertifikat aufgezeichnet sind zu erhalten; und
Bestimmen, dass das biometrische Zertifikat und das Attributzertifikat einander zugeordnet sind, wenn der Auszug, der durch die Berechnung erhalten wird, gleich dem Auszug des Objekts in der Erweiterungskennung ist.

6. Verfahren nach Anspruch 2, wobei die Erweiterungskennung eine Ausgabestelle des biometrischen Zertifikats und/oder eine laufende Nummer des biometrischen Zertifikats und/oder eine Liste von Entitäts-Namen und/oder einen Auszug des Objekts umfasst.

7. Verfahren nach Anspruch 6, wobei der Auszug des Objekts erhalten wird durch die Berechnung basierend auf wenigstens einem der Parameter, die enthalten: laufende Nummer, Geltungsdauer, Objekt und die eindeutige Kennung des Objekts, Ausgabestelle und die eindeutige Kennung der Ausgabestelle, Schablonenformatkennung, biometrische Merkmalsschablone und Erweiterungsinformationen des biometrischen Zertifikats.

8. Verfahren nach den Ansprüchen 2 bis 7, wobei die Erweiterungskennung in Basiserweiterungsinformationen des Attributzertifikats enthalten ist.

9. Verfahren nach Anspruch 2, das ferner Folgendes umfasst:
Einstellen von Sicherheitsebenen für Attribute mit unterschiedlichen Privilegien in dem Attributzertifikat;
und
wobei das Ausführen der Identitätsauthentifizierung basierend auf den biometrischen Merkmalsdaten und dem biometrischen Zertifikat (606) Folgendes umfasst:
wenn der Übereinstimmungsgrad die Anforderung erfüllt, Bestimmen, dass der Anwender die Identitätsauthentifizierung bestanden hat:
wenn der Übereinstimmungsgrad die Anforderung nicht erfüllt, Bestimmen, dass der Anwender die Identitätsauthentifizierung nicht bestanden hat.

10. System zum Implementieren von Authentifizierung zur Informationssicherheit, **dadurch gekennzeichnet, dass** das System Folgendes umfasst:
ein Client-Endgerät zum Senden einer Zugangsanforderung zu einer Dienstbereitstellungseinheit und Empfangen von Authentifizierungsergebnissen von der Dienstbereitstellungseinheit, wobei die Zugangsanforderung ein biometrisches Zertifikat und ein Attributzertifikat, das unterschiedliche Sicherheitsebenen für Attribute mit unterschiedlichen Privilegien eingestellt aufweist, führt;
die Dienstbereitstellungseinheit, die ausgelegt ist, ein Zertifikat eines biometrischen Algorithmus, der entsprechende Beziehungen zwischen Sicherheitsebenen und einem oder mehreren biometrischen Identifikationsparametern aufzeichnet, und
biometrische Merkmalsdaten, die durch das Client-Endgerät eingegeben werden, zu erfassen; und ausgelegt ist, von einer Identitätsauthentifizierungseinheit anzufordern, Identitätsauthentifizierung basierend auf dem biometrischen Zertifikat auszuführen, und von einer Privilegienauthentifizierungseinheit anzufordern,
Privilegienauthentifizierung basierend auf dem Attributzertifikat auszuführen; und
ausgelegt ist, die Sicherheitsebene des Attributs basierend auf dem Privileg eines Attributs in dem Attributzertifikat zu bestimmen; und ausgelegt ist, den einen oder
die mehreren biometrischen Identifikationsparameter, die der Sicherheitsebene entsprechen, zu erfassen;
die Identitätsauthentifizierungseinheit, die ausgelegt ist, Identitätsauthentifizierung gemäß dem biometrischen Zertifikat für das Client-Endgerät, das die biometrischen Merkmalsdaten eingibt, auszuführen und zu bestimmen, ob ein Übereinstimmungsgrad zwischen den biometrischen Merkmalsdaten und dem biometrischen Zertifikat eine Anforderung erfüllt, die durch den einen oder die mehreren biometrischen Identifikationsparameter vorgegeben ist; und
die Privilegienauthentifizierungseinheit, die ausgelegt ist,
Privilegienauthentifizierung basierend auf dem Attributzertifikat auszuführen;
wobei die biometrischen Identifikationsparameter den biometrischen Typ, den Erkennungsalgorithmus, die Falschabgleichsrate, die Anzahl der Wiederholungen oder die Qualität der biometrischen Daten umfassen.

## Revendications

1. Procédé d'authentification pour la sécurisation d'informations, **caractérisé en ce que** le procédé comprend :
la réception, par une unité de fourniture de service depuis un utilisateur, d'une requête d'accès qui comporte un certificat d'attributs (601) et un certificat biométrique,
différents niveaux de sécurité étant établis pour les attributs de différents privilèges dans le certificat d'attributs ;
l'acquisition, par l'unité de fourniture de service, d'un certificat d'algorithme biométrique qui enregistre des relations correspondantes entre les niveaux de sécurité et un ou plusieurs paramètres d'identification biométriques ;
la détermination, par l'unité de fourniture de service en fonction du privilège d'un attribut dans le certificat d'attributs, du niveau de sécurité de l'attribut, et l'acquisition des un ou plusieurs paramètres d'identification biométriques correspondant au niveau de sécurité (606) ;
l'acquisition, par une unité d'authentification d'identité, du certificat biométrique et de données de caractéristiques biométriques de l'utilisateur pour effectuer une authentification d'identité, et la détermination qu'un degré de concordance entre les données de caractéristiques biométriques et le certificat biométrique satisfait ou non une exigence établie par les un ou plusieurs paramètres d'identification biométriques (606) ;
l'exécution, par une unité d'authentification de privilèges, d'une authentification de privilèges en fonction du certificat d'attributs (609) ; et
la commande, par l'unité de fourniture de service, d'un accès d'utilisateur en fonction des résultats de l'authentification d'identité et de l'authentification de privilèges ;
dans lequel les paramètres d'identification biométriques comprennent un type biométrique, un algorithme de reconnaissance, un taux de fausses concordances, un nombre de tentatives renouvelées ou une qualité de données biométriques.

2. Procédé selon la revendication 1, dans lequel le certificat d'attributs comporte un identifiant d'extension pour indiquer un certificat biométrique associé au certificat d'attributs ; l'étape d'acquisition d'un certificat biométrique et de données de caractéristiques biométriques de l'utilisateur pour effectuer une authentification d'identité comprend :
l'acquisition du certificat biométrique, la détermination, en fonction de l'identifiant d'extension, que le certificat biométrique acquis est associé ou non au certificat d'attributs comporté dans la requête d'accès ;
l'acquisition de données de caractéristiques biométriques de l'utilisateur, et
l'exécution (606) d'une authentification d'identité en fonction des données de caractéristiques biométriques et du certificat biométrique quand le certificat biométrique est associé au certificat d'attributs.

3. Procédé selon la revendication 2, dans lequel l'identifiant d'extension comporte un émetteur de certificat biométrique et un numéro de série de certificat biométrique ; et ladite détermination que le certificat biométrique acquis est associé ou non au certificat d'attributs comprend :
la détermination que le certificat biométrique et le certificat d'attributs sont associés quand l'émetteur de certificat biométrique et le numéro de série de certificat biométrique enregistrés dans le certificat biométrique sont identiques à l'émetteur de certificat biométrique et au numéro de série de certificat biométrique enregistrés dans l'identifiant d'extension.

4. Procédé selon la revendication 2, dans lequel l'identifiant d'extension comporte une liste de noms d'entités qui comporte au moins un sujet et un identifiant unique du sujet ; et
ladite détermination que le certificat biométrique acquis est associé ou non au certificat d'attributs comprend :
la détermination que le certificat biométrique et le certificat d'attributs sont associés quand un sujet et un identifiant unique du sujet enregistrés dans le certificat biométrique sont inclus dans la liste de noms d'entités de l'identifiant d'extension.

5. Procédé selon la revendication 2, dans lequel l'identifiant d'extension comprend un abrégé d'objet ; et
ladite détermination que le certificat biométrique acquis est associé ou non au certificat d'attributs comprend :
le calcul pour obtenir un abrégé en fonction d'un numéro de série de certificat biométrique, d'une période de validité, d'un sujet et de l'identifiant unique du sujet,
d'un émetteur et de l'identifiant unique de l'émetteur, d'un modèle de caractéristiques biométriques, d'une identité de format de modèle et d'informations d'extension enregistrés dans le certificat biométrique ; et
la détermination que le certificat biométrique et le certificat d'attributs sont associés quand l'abrégé obtenu par calcul est identique à l'abrégé d'objet dans l'identifiant d'extension.

6. Procédé selon la revendication 2, dans lequel l'identifiant d'extension comprend au moins l'un d'un émetteur de certificat biométrique et d'un numéro de série de certificat biométrique, d'une liste de noms d'entités et d'un abrégé d'objet.

7. Procédé selon la revendication 6, dans lequel l'abrégé d'objet est obtenu par calcul en fonction d'au moins l'un des paramètres comportant : numéro de série, période de validité, sujet et identifiant unique du sujet, émetteur et identifiant unique de l'émetteur, identité de format de modèle, modèle de caractéristiques biométriques et informations d'extension du certificat biométrique.

8. Procédé selon les revendications 2 à 7, dans lequel l'identifiant d'extension est inclus dans des informations d'extension de base du certificat d'attributs.

9. Procédé selon la revendication 2, comprenant en outre :
l'établissement de niveaux de sécurité pour les attributs de différents privilèges dans le certificat d'attributs ;
et
ladite exécution d'une authentification d'identité en fonction des données de caractéristiques biométriques et du certificat biométrique (606) comprend :
si le degré de concordance satisfait l'exigence, la détermination que l'utilisateur a réussi l'authentification d'identité ;
si le degré de concordance ne satisfait pas l'exigence, la détermination que l'utilisateur a échoué à l'authentification d'identité.

10. Système de mise en oeuvre d'une authentification pour la sécurisation d'informations, **caractérisé en ce que** le système comprend :
un terminal client, pour envoyer une requête d'accès à une unité de fourniture de service, et recevoir des résultats d'authentification depuis l'unité de fourniture de service, la requête d'accès comportant un certificat biométrique et un certificat d'attributs qui comporte différents niveaux de sécurité établis pour des attributs de différents privilèges ;
l'unité de fourniture de service, adaptée pour acquérir un certificat d'algorithme biométrique qui enregistre des relations correspondantes entre les niveaux de sécurité et un ou plusieurs paramètres d'identification biométriques, et des données de caractéristiques biométriques entrées par le terminal client ; et adaptée pour demander à une unité d'authentification d'identité d'effectuer une authentification d'identité en fonction du certificat biométrique et pour demander à une unité d'authentification de privilèges d'effectuer une authentification de privilèges en fonction du certificat d'attributs ; et adaptée pour déterminer le niveau de sécurité de l'attribut en fonction du privilège d'un attribut dans le certificat d'attributs ; et adaptée pour acquérir les un ou plusieurs paramètres d'identification biométriques correspondant au niveau de sécurité ;
l'unité d'authentification d'identité, adaptée pour effectuer une authentification d'identité en fonction du certificat biométrique du terminal client qui entre les données de caractéristiques biométriques, et déterminer qu'un degré de concordance entre les données de caractéristiques biométriques et le certificat biométrique satisfait ou non un exigence établie par les un ou plusieurs paramètres d'identification biométriques ; et
l'unité d'authentification de privilèges, adaptée pour effectuer une authentification de privilèges en fonction du certificat d'attributs ;
dans lequel les paramètres d'identification biométriques comprennent un type biométrique, un algorithme de reconnaissance, un taux de fausses concordances, un nombre de tentatives renouvelées ou une qualité de données biométriques.
